# EUROPÄISCHE PATENTSCHRIFT

(11) **EP 2 492 570 B1**
(45) Veröffentlichungstag und Bekanntmachung des Hinweises auf die Patenterteilung: **05.08.2015**
(21) Anmeldenummer: 11156005.8
(22) Anmeldetag: 25.02.2011
(51) Int. Cl.: F16L 33/01, F16L 33/207, F16L 33/28

(54) **Verfahren zur Herstellung eines Schlauches mit Schlaucharmatur**
Method of manufacturing a hose with a hose fitting
Procédé de fabrication d'un tuyau souple avec un raccord de tuyau souple

(43) Veröffentlichungstag der Anmeldung: 29.08.2012
(73) Patentinhaber: ELAFLEX - Gummi Ehlers GmbH, 22525 Hamburg (DE)
(72) Erfinder: Aehle, Achim, 24582, Bordesholm (DE)
(74) Vertreter: Glawe, Delfs, Moll

(56) Entgegenhaltungen:
- EP-A1- 2 103 856
- EP-A2- 0 292 165
- WO-A1-93/08986
- WO-A1-2004/023023
- WO-A1-2010/101872
- GB-A- 810 400
- US-A1- 2005 287 326
- US-A1- 2006 163 871
- US-A1- 2009 169 790
- US-A1- 2011 006 515

## Beschreibung

Die Erfindung betrifft ein Verfahren zur Herstellung einer Anordnung, die aufweist:
a) einen Schlauch mit einer Außendecke und einem Innenliner,
b) eine Schlaucharmatur, die mit einem Endbereich des Schlauches dergestalt verbunden ist, dass der Innenliner das Innere der Schlaucharmatur auskleidet.

Die Erfindung betrifft zudem eine aus dem Verfahren erhältliche Anordnung.

Bei der Förderung fließfähiger Produkte werden beispielsweise in der pharmazeutischen oder kosmetischen Industrie oder der Lebensmittelindustrie hohe Anforderungen an die Reinhaltung gestellt. Mit dem Produkt in Berührung kommende Materialien müssen gegenüber dem Produkt vollkommen inert sein und gegebenenfalls eine entsprechende Zertifizierung aufweist. Übliche Materialien für diesen Verwendungszweck sind beispielsweise zertifizierte Fluorpolymere wie PTFE und Edelstähle. Anfällig für Verunreinigungen und damit problematisch sind in der Regel Verbindungs- bzw. Stoßstellen beispielsweise im Bereich von Schlaucharmaturen, an denen unterschiedliche Materialien zum Einsatz kommen. Bei Schlaucharmaturen strebt man in der Regel an, diese so weit als möglich durch eine Innenlage des Schlauches (auch als Innenliner bezeichnet) auszukleiden und auf diese Weise Spalte und Stoßstellen nach Möglichkeit zu vermeiden. Aus EP 1 540 231 A1 sind verschiedene Gestaltungen einer Anordnung von Schlauch und Schlaucharmatur bekannt. Es wird dabei ein mehrlagiger Schlauch mit einem Innenliner verwendet, bei dem die einzelnen Schlauchlagen frei übereinander liegen und nicht miteinander verbunden sind.

US 2011/0006515 A1, US 2006/0163871 A1, GB 810400 A, EP 0 292 165 A2, US 2005/0287326 A1 und WO 2010/101872 A1 offenbaren mit Innenlinern aus PTFE ausgekleidete Schläuche und zugehörige Schlaucharmaturen.

Der Erfindung liegt die Aufgabe zu Grunde, eine Anordnung der eingangs genannten Art sowie ein Verfahren zu deren Herstellung zur Verfügung zu stellen, die eine sichere Förderung fließfähiger Produkte ohne die Gefahr der Verunreinigung gestattet und sich einfach und kostengünstig mit verschiedenen Schlauchlängen herstellen lässt.

Das erfindungsgemäße Verfahren zur Herstellung einer solchen Anordnung weist die folgenden Schritte auf:
a) zur Verfügung stellen eines Schlauches mit einer Außendecke und einem Innenliner, die einen durch gemeinsame Extrusion hergestellten Verbund bilden; und einer passenden Schlaucharmatur,
b) Lösen des Verbundes zwischen Außendecke und Innenliner des Schlauches in einem Endbereich des Schlauches auf einer Länge, die der Summe der vorgesehenen Längen des ersten und zweiten Endabschnittes des Schlauches entspricht,
c) Freilegen des Innenliners durch Abtrennen der Auβendecke und gegebenenfalls vorhandener Einlagen zwischen Außendecke und Innenliner zur Herstellung des zweiten Endabschnittes des Schlauches, bei dem der Innenliner frei liegt,
d) Aufsetzen der Schlaucharmatur dergestalt, dass der Stutzen in die gebildete Tasche des ersten Endabschnittes des Schlauches eingeschoben wird,
e) Anformen des Innenliners an die in Axialrichtung weisende Dichtfläche der Schlaucharmatur.

Zunächst seien einige im Rahmen der Erfindung verwendete Begriffe erläutert.

Die Außendecke eines Schlauches ist dessen radial nach außen weisender Bereich und dient in der Regel der Herstellung einer hinreichenden mechanischen Festigkeit sowie Beständigkeit gegenüber Umwelteinflüssen. Erfindungsgemäß kann diese Außendecke vorzugsweise aus einem Kautschuk wie beispielsweise Gummi bestehen.

Der Innenliner, auch als Innenlage oder Innenseele des Schlauches bezeichnet, trägt in der Regel nicht oder nur zu einem kleineren Teil zur mechanischen Festigkeit des Schlauches bei und ist in erster Linie dahingehend abgestimmt, dass keine unerwünschten Wechselwirkungen zwischen dem Material des Innenliners sowie den geförderten Produkten entstehen. Im Rahmen der Erfindung besteht der Innenliner vorzugsweise aus einem für den vorgesehenen Verwendungszweck zertifizierten Fluorpolymer wie beispielsweise PTFE.

Im Rahmen der Erfindung können zwischen Außendecke und Innenliner Einlagen vorgesehen sein, die vorzugsweise mechanische Eigenschaften des Schlauches wie beispielsweise Druck- und/oder Vakuumfestigkeit und/oder Knickfestigkeit verbessern. Bei diesen Einlagen kann es sich beispielsweise um verstärkende Geflechte aus Metall oder Kunststoff handeln. Ebenfalls möglich ist die Gestaltung dieser Einlagen in der Art einer Spiralfeder. Die Einlagen können mit der Außendecke einen festen Verbund eingehen, beispielsweise können entsprechende Geflechte mit einer Außendecke aus synthetischem Kautschuk bei der Herstellung des Schlauches coextrudiert werden.

Der Begriff Schlaucharmatur bezeichnet ein Anschlussstück, mit dessen Hilfe ein Ende des Schlauches mit einem anderen Schlauch oder mit einem Anschlussstutzen eines Behälters oder einer Apparatur verbunden werden kann. Der Innenliner kleidet das Innere der Schlaucharmatur aus. Dies bedeutet, dass die Innenflächen der Schlaucharmatur, die prinzipiell mit gefördertem Produkt in Berührung kommen könnten, vorzugsweise vollständig oder aber zu wesentlichen Teilen von dem Innenliner überdeckt werden. Vorzugsweise ist der Innenliner im Wesentlichen formschlüssig an diese Innenflächen angeformt.

Außendecke und Innenliner des Schlauches bilden miteinander einen festen Verbund. Erfindungsgemäß wird bei der Herstellung eines solchen Schlauches ein Innenliner beispielsweise aus PTFE gemeinsam mit einer Außendecke beispielsweise aus einem synthetischen Kautschuk und gegebenenfalls mit Verstärkungseinlagen extrudiert, so dass ein fester Verbund zwischen Außendecke und Innenliner entsteht. Ein Schlauch dieser Bauart kann in einem kontinuierlichen Fertigungsprozess in größeren Längen hergestellt werden. Gewünschte Schlauchlängen können aus Schlauchrollen eines solchen Schlauches geschnitten werden.

Erfindungsgemäß ist der feste Verbund zwischen Außendecke und Innenliner des Schlauches in dem Endbereich, in dem die Schlaucharmatur angeschlossen ist, gelöst. In einem ersten Endabschnitt ist lediglich dieser feste Verbund gelöst, die Außendecke umschließt jedoch noch radial den Innenliner, so dass in diesem ersten Endabschnitt zwischen Außendecke und Innenliner eine im Wesentlichen ringförmige Tasche entsteht. Sofern der Schlauch Einlagen zwischen Außendecke und Innenliner oder als Teil der Außendecke aufweist, ist die Tasche vorzugsweise gebildet zwischen dem Innenliner einerseits und der Außendecke mit den Einlagen andererseits. In einem unmittelbar daran anschließenden zweiten Endabschnitt ist die Außendecke mitsamt gegebenenfalls vorhandenen Einlagen vollständig abgetrennt, so dass der Innenliner die Außendecke in Richtung auf das Schlauchende axial überragt und gewissermaßen ein freies Ende bildet.

Die Schlaucharmatur ist so auf das Schlauchende aufgesetzt, dass das freie Ende des Innenliners (der zweite Endabschnitt) innen durch die Schlaucharmatur durchgeführt ist und deren Innenflächen auskleidet. Die Länge dieses zweiten Endabschnittes ist so gewählt, dass der Innenliner nach vorne aus der Schlaucharmatur herausragt, gegen den Flansch der Armatur anliegt und so eine in Axialrichtung weisende Dichtfläche der Schlaucharmatur bildet. Der Stutzen der Schlaucharmatur ist in die Tasche des ersten Abschnitts eingeschoben und bewirkt so eine mechanische Verbindung zwischen Schlauch und Schlaucharmatur.

Es kann zusätzlich eine außen am Schlauch angebrachte Hülse vorgesehen sein, die im Bereich des ersten Endabschnittes (der Tasche) durch Ausüben eines in Radialrichtung weisenden Pressdruckes eine mechanische Verbindung zwischen Schlauch und Schlaucharmatur herstellt bzw. verbessert.

Im Rahmen des erfindungsgemäßen Verfahrens wird zunächst ein auf die gewünschte Länge geschnittener Schlauch und eine dazu passende Schlaucharmatur bereit gestellt. Anschließend wird in dem Endbereich des Schlauches, an dem die Armatur angebracht werden soll, der feste Verbund zwischen Außendecke und Innenliner gelöst. Dies geschieht auf einer axialen Länge, die der Summe der Vorgesehenenlängen des ersten Endabschnittes (Tasche) und des zweiten Endabschnittes (freigelegter Innenliner) entspricht. Das Lösen oder Auftrennen dieses Verbundes kann durch geeignete Werkzeuge erfolgen. Dabei kann es sich um mechanische Werkzeuge wie beispielsweise Messer, Klingen, Zahnsegmente oder Schneidkronen handeln. Es kann sich um Kreisbewegung ausführende Werkzeuge (Rotation), um in Axialrichtung des Schlauches bewegte Werkzeuge oder um Werkzeuge, die solche Bewegungsabläufe miteinander kombinieren, handeln. Alternativ kann das Abtrennen durch thermische, optische (beispielsweise Laser) oder hydraulische (beispielsweise Schneiden mittels eines Wasserstrahls) Schneidverfahren handeln. Es ist im Rahmen der Erfindung ebenfalls möglich, feststehende Werkzeuge zu benutzen und den Schlauch relativ zu dem Werkzeug zu bewegen.

Nach diesem Lösen des Verbundes zwischen Außendecke und Innenliner erfolgt das Freilegen des Innenliners auf dem zweiten Endabschnitt durch Abtrennen der Außendecke und gegebenenfalls vorhandener Einlagen zwischen Außendecke und Innenliner. Zu diesem Zweck kann beispielsweise ein Schneidwerkzeug radial um den Schlauch herumgeführt werden. Die Schneidtiefe dieses Werkzeugs wird so gewählt, dass es die Außendecke abtrennt, jedoch nicht in den Innenliner hineinschneidet.

Im nächsten Schritt wird die Schlaucharmatur aufgesetzt. Dabei wird der Stutzen der Armatur in die Tasche zwischen Außendecke und Innenliner eingeschoben. Das freie Ende des Innenliners wird innen durch die Schlaucharmatur hin durchgeführt und ragt aus deren Anschlussseite (dem Flansch) heraus. Dieser heraus stehende Bereich wird bevorzugt formschlüssig an den Flansch bzw. die axiale Dichtfläche der Armatur angeformt. Fluorpolymere wie PTFE besitzen ein Formgedächtnis, so dass sie nach dem Anformen an die Armatur diese gewünschte Form im wesentlichen beibehalten. An der Dichtfläche der Armatur kann beispielsweise eine Ringnut vorgesehen sein, in die ein radialer Endbereich des angeformten Innenliners zu liegen kommt. Beim Ansetzen der Armatur an das zugehörige Gegenstück, beispielsweise einen Tankanschluss, kann ein O-Ring in diese Ringnut eingelegt werden, der einerseits eine zusätzliche Dichtwirkung aufweist und andererseits den Innenliner in der Ringnut zusätzlich fixiert. Es kann fakultativ eine oben beschriebene Hülse aufgeschoben werden, um die Festigkeit der mechanischen Verbindung zwischen Schlauch und Schlaucharmatur zu erhöhen.

Ein Ausführungsbeispiel der Erfindung wird nachfolgend anhand der Zeichnung erläutert. Darin zeigen:
Figur 1: einen Längsschnitt durch einen Schlauch,
Figur 2: den Endabschnittes des Schlauches nach Abtrennung der Außendecke und Herstellung einer ringförmigen Tasche,
Figur 3: diesen Endabschnitt nach Einschieben des Schlauchstutzens,
Figur 4: die erfindungsgemäße Anordnung nach Anformen des Innenliners an die Dichtfläche (den Flansch) der Schlaucharmatur,
Figur 5: einen Detailausschnitt aus Figur 4.

Ein für den Transport pharmazeutischer Produkte geeigneter und zugelassener Schlauch weist eine Außendecke 1 auf, an der innenseitig eine bei 2 angeordnete Verstärkungseinlage beispielsweise aus einem Stahlgeflecht angebracht sein kann. Das Innere des Schlauches ist mit einem Innenliner 3 aus PTFE ausgekleidet, so dass sich der Schlauch gegenüber darin geförderten pharmazeutischen Produkten inert verhält.

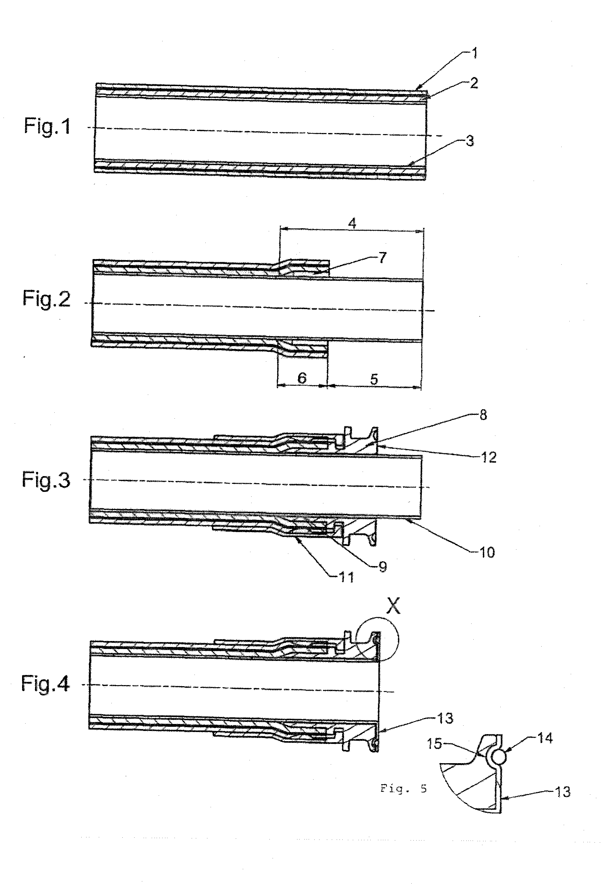

Zur Herstellung einer erfindungsgemäßen Anordnung wird zunächst auf einem Längenabschnitt 4 (siehe Figur 2) mit einem geeigneten Werkzeug der feste Verbund zwischen Innenliner 3 einerseits und Außendecke 1 und Verstärkungseinlagen 2 andererseits gelöst. Im nächsten Schritt wird auf einem Längenabschnitt 5 die Außendecke 1 und Verstärkungseinlagen 2 abgetrennt, so dass auf diesem Längenabschnitt 5 der Innenliner 1 freigelegt ist. Der Längenabschnitt 4 ist jetzt aufgeteilt in einen ersten Endabschnitt 6, in dem die ringförmige Tasche 7 gebildet ist und den zweiten Endabschnitt 5, bei dem der Innenliner 3 frei liegt.

Anschließend wird die Schlaucharmatur 8 auf das so präparierte Schlauch Ende aufgeschoben. Der Stutzen 9 der Schlaucharmatur 8 schiebt sich in die Tasche 7 und bewirkt so eine mechanische Verbindung zwischen dem Schlauch und der Schlaucharmatur 8. Das freie Ende des Innenliners 3 wird durch den Innenraum der Schlaucharmatur 8 geführt und ragt bei 10 aus der Anschlussseite der Armatur 8 (dem Flansch) heraus. Man erkennt, dass der Innenliner 3 die Schlaucharmatur 8 von innen vollständig auskleidet, so dass durch den Schlauch gefördertes Produkt nicht mit dem Material der Schlaucharmatur 8 selbst in Berührung kommen kann. Eine Presshülse 11 wird von außen über den Endabschnitt 6 mit der Tasche 7 geschoben und übt auf den Endabschnitt 6 einen radial nach innen wirkenden Druck aus. Dies bewirkt eine feste mechanische Verbindung zwischen dem Schlauch und der Schlaucharmatur 8. Es versteht sich, dass die Hülse 11 gegebenenfalls vor dem Anbringen des Schlauches an der Schlaucharmatur 8 auf den Schlauch geschoben werden muss, wenn das gegenüberliegende Ende des Schlauches nicht als freies Ende zum nachträglichen Aufschieben dieser Hülse 11 zur Verfügung steht.

Das aus der Schlaucharmatur 8 nach vorne herausstehende Ende 10 des Innenliners 3 wird formschlüssig an den Flansch 12 der Schlaucharmatur 8 angeformt. Dieses Anformen kann unter thermischer Einwirkung geschehen, so dass das Material des Innenliners 3 (PTFE) dauerhaft verformt wird und die gewünschte Form aufgrund seines Formgedächtnis beibehält. Wie in Figur 4 zu erkennen ist, bildet dieses Ende 10 dann eine in Axialrichtung weisende Dichtfläche 13 (im Detail dargestellt in Figur 5). In dem Flansch 12 kann eine ringförmige Ausnehmung 15 (Ringnut) vorgesehen sein, in die das herausstehende Ende 10 des Innenliners 3 eingelegt wird. Beim Ansetzen des Flansches 12 an eine zugehörige Gegendichtfläche kann in die Ausnehmung 15 beispielsweise ein O-Ring 14 eingelegt werden, der einerseits die Dichtwirkung erhöht und andererseits das Ende 10 in der Ausnehmung 15 fixiert.

## Patentansprüche

1. Verfahren zur Herstellung einer Anordnung, die aufweist:
einen Schlauch mit einer Außendecke (1) und einem Innenliner (3) und
eine Schlaucharmatur (8), die mit einem Endbereich des Schlauches dergestalt verbunden ist, dass der Innenliner (3) das Innere der Schlaucharmatur (8) auskleidet,
mit den Schritten:
a) zur Verfügung stellen des Schlauches mit der Auβendecke (1) und dem Innenliner (3), die einen durch gemeinsame Extrusion hergestellten festen Verbund bilden; und einer passenden Schlaucharmatur (8),
b) Lösen des festen Verbundes zwischen Außendecke und Innenliner des Schlauches in einem Endbereich des Schlauches auf einer Länge, die der Summe der vorgesehenen Längen des ersten und zweiten Endabschnittes (5, 6) des Schlauches entspricht,
c) Freilegen des Innenliners (3) durch Abtrennen der Außendecke (1) und gegebenenfalls vorhandener Einlagen (2) zwischen Außendecke (1) und Innenliner (3) zur Herstellung des zweiten Endabschnittes (5) des Schlauches, bei dem der Innenliner (3) frei liegt,
d) Aufsetzen der Schlaucharmatur (8) dergestalt, dass der Stutzen (9) in die gebildete Tasche (7) des ersten Endabschnittes (6) des Schlauches eingeschoben wird,
e) Anformen des Innenliners (3) an die in Axialrichtung weisende Flanschfläche (12) der Schlaucharmatur.

2. Verfahren nach Anspruch 1, **dadurch gekennzeichnet, dass** das Lösen des festen Verbundes zwischen Außendecke (1) und Innenliner (3) des Schlauches durch rotierende Schneidwerkzeuge, durch axiale bewegte Schneidwerkzeuge oder durch thermische, optische oder hydraulische Schneidverfahren erfolgt.

3. Verfahren nach Anspruch 1 oder 2, **dadurch gekennzeichnet, dass** das Freilegen des Innenliners (3) durch Abtrennen der Außendecke (1) und gegebenenfalls vorhandener Einlagen (2) zwischen Außendecke und Innenliner durch ein radial um den Schlauch geführtes Schneidwerkzeug erfolgt.

4. Verfahren nach einem der Ansprüche 1 bis 3, **dadurch gekennzeichnet, dass** zusätzlich eine Hülse (11) auf den ersten Endabschnitt (6) aufgebracht wird, die eine mechanische Verpressung zwischen Schlauch und Schlaucharmatur (8) bewirkt.

5. Anordnung, erhältlich durch ein Verfahren nach einem der Ansprüche 1 bis 4.

6. Anordnung nach Anspruch 5, **dadurch gekennzeichnet, dass** der Schlauch Einlagen (2) zwischen Außendecke (1) und Innenliner (3) aufweist, wobei die im wesentlichen ringförmige Tasche gebildet ist zwischen dem Innenliner (3) einerseits und der Außendecke (1) mit Einlagen (2) andererseits.

7. Anordnung nach Anspruch 5 oder 6, **dadurch gekennzeichnet, dass** die Außendecke (1) aus einem Kautschuk besteht.

8. Anordnung nach einem der Ansprüche 5 bis 7, **dadurch gekennzeichnet, dass** der Innenliner (3) aus einem für Lebensmitteln und/oder pharmazeutischen Produkten und/oder kosmetischen Produkten unbedenklichen Material besteht, vorzugsweise aus einem für die vorgesehene Verwendung des Schlauches zertifizierten Fluorpolymer wie PTFE.

9. Anordnung nach einem der Ansprüche 6 bis 8, **dadurch gekennzeichnet, dass** die Einlagen (2) Verstärkungseinlagen zur Erhöhung der Vakuum- und/oder Druckstabilität und/oder Knickfestigkeit umfassen.

10. Anordnung nach einem der Ansprüche 5 bis 9, **dadurch gekennzeichnet, dass** der Innenliner (3) im Bereich der in Axialrichtung weisenden Dichtfläche (13) der Schlaucharmatur (8) formschlüssig an diese angeformt ist.

11. Anordnung nach einem der Ansprüche 5 bis 10, **dadurch gekennzeichnet, dass** im Bereich des ersten Endabschnittes (6) eine Hülse (11) vorgesehen ist, die durch Verpressung eine mechanische Verbindung zwischen Schlauch und Schlaucharmatur herstellt bzw. verbessert.

## Claims

1. Method for producing an arrangement which comprises:
a hose which comprises an outer cover (1) and an inner liner (3), and
a hose fitting (8) which is connected to an end region of the hose such that the inner liner (3) lines the inside of the hose fitting (8),
said method comprising the steps of:
a) providing the hose having the outer cover (1) and the inner liner (3), the two of which form a rigid bond produced by co-extrusion, and a suitable hose fitting (8),
b) releasing the rigid bond between the outer cover and the inner liner of the hose, in an end region of the hose, at a length which corresponds to the sum of the intended lengths for the first and second end portions (5, 6) of the hose,
c) exposing the inner liner (3) by removing the outer cover (1) and inserts (2), which may be present between the outer cover (1) and the inner liner (3), in order to produce the second end portion (5) of the hose, in which the inner liner (3) is exposed,
d) attaching the hose fitting (8) in such a way that the connecting piece (9) is inserted into the space (7) formed in the first end portion (6) of the hose,
e) integrally moulding the inner liner (3) to the flange face (12), which faces in the axial direction, of the hose fitting.

2. Method according to claim 1, **characterised in that** the rigid bond between the outer cover (1) and the inner liner (3) of the hose can be released by a rotating cutting tool, an axially moved cutting tool or by thermal, optical or hydraulic cutting methods.

3. Method according to either claim 1 or claim 2, **characterised in that** the inner liner (3) is exposed by removing the outer cover (1) and the inserts (2), which may be present between the outer cover and the inner liner, by a cutting tool which is guided radially around the hose.

4. Method according to any of claims 1 to 3, **characterised in that** a ferrule (11) is also attached to the first end portion (6) and causes mechanical compression between the hose and the hose fitting (8).

5. Arrangement obtainable by a method according to any of claims 1 to 4.

6. Arrangement according to claim 5, **characterised in that** the hose has inserts (2) between the outer cover (1) and the inner liner (3), the substantially annular space being formed between the inner liner (3) on one side and the outer cover (1), together with the inserts (2), on the other side.

7. Arrangement according to either claim 5 or claim 6, **characterised in that** the outer cover (1) consists of a rubber.

8. Arrangement according to any of claims 5 to 7, **characterised in that** the inner liner (3) consists of a material which is safe to use with foodstuffs and/or pharmaceutical products and/or cosmetic products, preferably of a fluoropolymer such as PTFE which is certified for the intended use of the hose.

9. Arrangement according to any of claims 6 to 8, **characterised in that** the inserts (2) comprise reinforcement inserts for increasing the vacuum stability and/or pressure stability and/or buckling strength.

10. Arrangement according to any of claims 5 to 9, **characterised in that** the inner liner (3) is integrally moulded to the hose fitting (8), in a form-fitting manner, in the region of the sealing face (13), which faces in the axial direction, of said hose fitting.

11. Arrangement according to any of claims 5 to 10, **characterised in that** a ferrule (11) is provided in the region of the first end portion (6) and produces or improves a mechanical connection between the hose and the hose fitting by means of compression.

## Revendications

1. Procédé de fabrication d'un agencement qui présente :
- un tuyau avec une couche extérieure (1) et une garniture intérieure (3), et
- un embout de tuyau (8) qui est relié avec une zone d'extrémité du tuyau de telle sorte que la garniture intérieure (3) tapisse l'intérieur de l'embout de tuyau (8),
comprenant les étapes consistant à :
a) mettre à disposition le tuyau avec la couche extérieure (1) et la garniture intérieure (3), qui forment un assemblage fixe fabriqué par voie d'extrusion commune, et un embout de tuyau (8) adapté ;
b) séparer l'assemblage fixe entre la couche extérieure et la garniture intérieure du tuyau dans une zone d'extrémité du tuyau sur une longueur qui correspond à la somme des longueurs prévues des première et deuxième sections d'extrémité (5, 6) du tuyau ;
c) mettre à nu la garniture intérieure (3) en enlevant la couche extérieure (1) et les éléments intercalaires (2) éventuellement présents entre la couche extérieure (1) et la garniture intérieure (3) pour réaliser la deuxième section d'extrémité (5) du tuyau dans laquelle la garniture intérieure (3) est exposée ;
d) poser l'embout de tuyau (8) de telle sorte que le support (9) soit introduit dans la poche (7) formée dans la première section d'extrémité (6) du tuyau ;
e) façonner la garniture intérieure (3) sur la surface de la bride (12) de l'embout de tuyau dirigée dans le sens axial.

2. Procédé selon la revendication 1, **caractérisé en ce que** la séparation de l'assemblage fixe entre la couche extérieure (1) et la garniture intérieure (3) du tuyau est réalisée au moyen d'outils de coupe rotatifs, au moyen d'outils de coupe à mouvement axial ou au moyen d'un procédé de découpe thermique, optique ou hydraulique.

3. Procédé selon la revendication 1 ou 2, **caractérisé en ce que** la mise à nu de la garniture intérieure (3) au moyen de l'enlèvement de la couche extérieure (1) et des éléments intercalaires (2) éventuellement présents entre la couche extérieure et la garniture intérieure est réalisée au moyen d'un outil de coupe guidé de façon radiale autour du tuyau.

4. Procédé selon l'une des revendications 1 à 3, **caractérisé en ce qu'**en complément, une manchette (11), qui a pour effet de produire une pression mécanique entre le tuyau et l'embout de tuyau (8), est installée sur la première section d'extrémité (6).

5. Agencement pouvant être obtenu au moyen d'un procédé selon l'une des revendications 1 à 4.

6. Agencement selon la revendication 5, **caractérisé en ce que** le tuyau présente des éléments intercalaires (2) entre la couche extérieure (1) et la garniture intérieure (3), la poche essentiellement annulaire étant formée entre, d'une part, la garniture intérieure (3) et, d'autre part, la couche extérieure (1) avec les éléments intercalaires (2).

7. Agencement selon la revendication 5 ou 6, **caractérisé en ce que** la couche extérieure (1) est constituée d'un caoutchouc.

8. Agencement selon l'une des revendications 5 à 7, **caractérisé en ce que** la garniture intérieure (3) est constituée d'un matériau sûr pour les denrées alimentaires et/ou les produits pharmaceutiques et/ou les produits cosmétiques, et de préférence d'un fluoropolymère certifié pour l'usage prévu du tuyau, comme le PTFE.

9. Agencement selon l'une des revendications 6 à 8, **caractérisé en ce que** les éléments intercalaires (2) comprennent des éléments de renforcement destinés à augmenter la stabilité au vide et/ou à la pression et/ou la résistance au flambage.

10. Agencement selon l'une des revendications 5 à 9, **caractérisé en ce que** dans la zone de la surface d'étanchéité (13) de l'embout de tuyau (8) dirigée dans le sens axial, la garniture intérieure (3) est façonnée de manière à épouser parfaitement sa forme.

11. Agencement selon l'une des revendications 5 à 10, **caractérisé en ce qu'**il est prévu, dans la zone de la première section d'extrémité (6), une manchette (11) qui crée ou améliore une jonction mécanique entre le tuyau et l'embout de tuyau par le biais d'une pression.
